# EUROPÄISCHE PATENTANMELDUNG

(11) **EP 2 159 525 A1**
(43) Veröffentlichungstag der Anmeldung: **03.03.2010**
(21) Anmeldenummer: 08163347.1
(22) Anmeldetag: 29.08.2008
(51) Int. Cl.: F27D 19/00, F27B 7/42, F27D 21/00, F23N 5/10, F23N 1/02

(54) **Verfahren zum Betrieb eines Ofens sowie Vorrichtung zur Durchführung des Verfahrens**

(71) Anmelder: Air Liquide Deutschland GmbH, 40235 Düsseldorf (DE)
(72) Erfinder: Rheker, Frank, 40227, Düsseldorf (DE)
(74) Vertreter: Heine, Christian Klaus

(57) **Zusammenfassung**

Das erfindungsgemäße Verfahren zum Betrieb eines Ofens (2), bei dem ein zu- mindest ein metallisches Element umfassender Ausgangsstoff aufgeschmolzen wird, indem der Ausgangsstoff durch mindestens einen Brenner (4) erwärmt wird, der mit einem Brennstoffvolumenstrom eines Brennstoffs und einem Oxidansvolumenstrom eines Oxidans betrieben wird, wobei eine Abgastemperatur des Ofens (2) überwacht wird, wobei in einem Standardbetriebszustand dem Brenner (4) ein Sollbrennstoffvolumenstrom und ein Solloxidansvolumenstrom zugeführt wird, wobei eine Änderung (26) der Abgastemperatur in vorgebbaren Zeitabständen aufgenommen und mit einem vorgebbaren Grenzwert (25) verglichen wird, zeichnet sich dadurch aus, dass dann, wenn die Änderung (26) der Abgastemperatur größer als der Grenzwert (25) ist, der Brenner (4) für eine Reduktionsdauer in einen Reduktionsbetriebszustand versetzt wird, in dem der Quotient von Brennstoffvolumenstrom zu Oxidansvolumenstrom durch mindestens eine der folgenden Maßnahmen:
A) einer sprunghaften Reduktion des Brennstoffvolumenstroms auf einen Reduktionsvolumenstrom und
B) einer sprunghaften Erhöhung des Oxidansvolumenstroms auf einen Erhöhungsvolumenstrom
erniedrigt und nach Ablauf der Reduktionsdauer in den Standardbetriebszustand zurückversetzt wird.

## Beschreibung

Gegenstand der vorliegenden Erfindung ist ein Verfahren und eine Vorrichtung zum Betrieb eines Ofens, insbesondere eines Ofens zum Einschmelzen von Metall wie bspw. von Eisenschrott.

Das Einschmelzen von Metallen zählt zu den energieintensiven Prozessen, bei denen große Energiemengen zum Erreichen des gewünschten Erfolges eingesetzt werden müssen. Entsprechende Verfahren zum Betrieb eines Ofens sind z. B. aus der US 6,247,416 bekannt. Aufgrund der stark steigenden Kosten für Energie und die Debatte um Kohlendioxidemissionen ist es erwünscht, den Einschmelzvorgang von Metallen energetisch günstiger zu gestalten.

Hiervon ausgehend liegt der vorliegenden Erfindung die Aufgabe zugrunde, ein Verfahren zum Betrieb eines Ofens anzugeben, bei dem der einzusetzende Energiebedarf verringert ist. Weiterhin soll eine entsprechende Vorrichtung zur Durchführung des Verfahrens vorgeschlagen werden.

Diese Aufgaben werden gelöst mit den Merkmalen der unabhängigen Ansprüche. Abhängige Ansprüche sind auf vorteilhafte Weiterbildungen gerichtet.

Das erfindungsgemäße Verfahren zum Betrieb eines Ofens, bei dem ein zumindest ein metallisches Element umfassender Ausgangsstoff aufgeschmolzen wird, indem der Ausgangsstoff durch mindestens einen Brenner erwärmt wird, der mit einem Brennstoffvolumenstrom eines Brennstoffs und einem Oxidansvolumenstrom eines Oxidans betrieben wird, wobei eine Abgastemperatur des Ofens überwacht wird, wobei in einem Standardbetriebszustand dem Brenner ein Sollbrennstoffvolumenstrom und ein Solloxidansvolumenstrom zugeführt wird, wobei eine Änderung der Abgastemperatur in vorgebbaren Zeitabständen aufgenommen und mit einem vorgebbaren Grenzwert verglichen wird, zeichnet sich dadurch aus, dass dann, wenn die Änderung der Abgastemperatur größer als der Grenzwert ist, der Brenner für eine Reduktionsdauer in einen Reduktionsbetriebszustand versetzt wird, in dem der Quotient von Brennstoffvolumenstrom zu Oxidansvolumenstrom durch mindestens eine der folgenden Maßnahmen:
A) einer sprunghaften Reduktion des Brennstoffvolumenstroms auf einen Reduktionsvo lumenstrom und
B) einer sprunghaften Erhöhung des Oxidansvolumenstroms auf einen Erhöhungsvo lumenstrom
erniedrigt und nach Ablauf der Reduktionsdauer in den Standardbetriebszustand zurückversetzt wird.

Unter einer sprunghaften Erhöhung und Reduktion eines Volumenstroms wird die verzögerungsfreie Änderung des Volumenstroms um mindestens 3% verstanden, bevorzugt um mindestens 5%. Es handelt sich also bei einer sprunghaften Änderung um eine unstetige Änderung nach Art eines Sprungs. Die Änderung der Abgastemperatur wird durch eine Überwachung der Abgastemperatur in einem Messpunkt überwacht. Durch Vergleich der erfassten Abgastemperaturen kann die Änderung der Abgastemperatur ermittelt werden. Der Brenner ist bevorzugt so ausgebildet, dass die Flamme des Brenners im Betrieb auf den Ausgangsstoff trifft und/oder diesen über- und/oder bestreicht. Der Ausgangsstoff umfasst üblicherweise aufzuschmelzendes Metall und ggf Zusatzstoffe wie bspw. Kohle und/oder kohlenstoffhaltige Zusatzstoffe oder Verbindungen.

Das aufzuschmelzende Metall kann bspw. Eisenschrott oder Aluminium umfassen. Weitere Zusatzstoffe im Ausgangsstoff stellen auch Verunreinigungen oder durch die Beschaffenheit der aufzuschmelzenden Güter bedingte Anteile dar.

Bspw. weisen aufzuschmelzende Getränkedosen Verunreinigungen in Form der Lackierung oder Inhaltsreste auf. Beispielsweise weisen Motoren beim Aufschmelen Verunreinigungen in Form von Schmier oder Getriebeöl auf. Viele Industriegüter weisen beim Aufschmelzen Kunststoffanteile, -komponenten und/oder -beschichtungen auf.

Beim Betrieb des Ofens kommt es zu Betriebszuständen, bei denen plötzlich eine größere Menge Kohlenstoff oder kohlenstoffhaltiges Material zur Oxidation zur Verfügung steht. Dies ist bspw. dann der Fall, wenn bei einem Aufschmelzen von Metall in einem Rotationsofen unter Zugabe von Kohle und/oder kohlenstoffhaltigen Zusatzstoffen, beispielsweise Koks und/oder Graphit oder Kunststoffteile beim Rotieren des Rotationsofens Kohle oder Kohlenstoff in größerer Menge mit dem entsprechenden Oxidans in Kontakt kommt. Beim Aufschmelzen bspw. von Getränkedosen oder anderen beschichteten oder lackierten metallischen Gegenständen kommt es bei Kontakt mit dem Oxidationsmittel oder beim Erreichen des entsprechenden Flammpunktes der Beschichtung oder Lackierung zur Oxidation der entsprechenden Beschichtung oder des Lacks. Bei solchen Gelegenheiten entsteht aufgrund des Brennstoffvolumenstroms und des Oxidansvolumenstroms eine Situation, bei der eine relativ große Menge von Kohlenmonoxid entsteht. Dies wird im Weiteren als Kohlenmonoxidfreisetzung bezeichnet. Dieses Kohlenmonoxid kann bei weiterem Kontakt mit Oxidans weiter zu Kohlendioxid oxidieren. Dieser Prozess ist exotherm. Bei dieser Kohlenmonoxidfreisetzung und der daran anschließenden Oxidation des Kohlenmonoxids zu Kohlendioxid kommt es zu einem signifikanten, schnellen Anstieg der Temperatur des Abgases, da im Abgas oft Umgebungsluft zur Abkühlung des Abgases zugeführt wird, wenn weiterhin die Betriebsbedingungen des Ofens nicht oder nur geringfügig geändert werden. Dies ist bspw. dann der Fall, wenn die Brennstoffzufuhr, also der Brennstoffvolumenstrom oder der Oxidansvolumenstrom nur geringfügig in kleinen Schritten geändert werden. Dann kommt es zu einem starken Anstieg der Abgastemperatur beim Inkontaktreten mit Frischluft als sogenannte Nachverbrennung bspw. um 300 °C oder mehr. Dies ist ein Temperaturanstieg, der grundsätzlich zum Aufschmelzen des Ausgangsstoffes nicht zur Verfügung steht, da er im Abgassystem erfolgt. Allerdings führt der Temperaturanstieg zu einer stärkeren Belastung des Abgassystems, insbesondere von feuerfesten Auskleidungen desselben.

Gemäß der vorliegenden Erfindung wird der starke Temperaturanstieg im Abgas, der mit einer Kohlenmonoxidfreisetzung auftritt detektiert und daran anschließend umgehend eine sprunghafte Reduktion des Brennstoffvolumenstroms auf einen reduzierten Volumenstrom vorgenommen. Dieser Reduktionsvolumenstrom unterscheidet sich deutlich vom Sollbrennstoffvolumenstrom bspw. um 10 % und mehr. Es erfolgt also eine sprunghafte Erniedrigung der Zufuhr des Brennstoffs, während der Oxidansvolumenstrom konstant gehalten wird. Da weiterhin das Kohlenmonoxid oxidiert wird, erfolgt im Vergleich zur Situation mit im Wesentlichen konstantem Brennstoffvolumenstrom eine deutliche Absenkung der Abgastemperatur, die jedoch durch die Oxidation der Kohlenmonoxidfreisetzung immer noch hoch ist. Hierdurch wird das Material der Abgasleitung weniger thermisch belastet und weist damit höhere Standzeiten auf.

Alternativ oder zusätzlich kann der Oxidansvolumenstrom sprunghaft auf einen Erhöhungsvolumenstrom erhöht werden. Hierdurch erfolgt die Oxidation der Kohlenmonoxidfreisetzung bereits gezielt im Ofen, so dass eine höhere Schmelzleistung erreicht werden kann. Hierdurch wird der Schmelzprozess effektiver.

Grundsätzlich führt die Reduktion des Quotienten von Brennstoffvolumenstrom zu Oxidansvolumenstrom auf sprunghafte Weise zu einer effektiveren Verfahrensführung bei ggf. geringerer Belastung des Ofenmaterials.

Als Brennstoff kommen insbesondere organische Verbindungen wie Kohlenwasserstoff, bspw. Erdgas zum Einsatz.

Gemäß einer vorteilhaften Ausgestaltung des erfindungsgemäßen Verfahrens wird der Grenzwert so gewählt, dass der Grenzwert mindestens um einen Faktor zwei, bevorzugt mindestens drei, größer ist als übliche Messwertschwankungen.

Unter üblichen Messwertschwankungen wird dabei die übliche Streuung der experimentell ermittelten Temperaturwerte, sowie leichte nicht auf eine Kohlenmonoxidfreisetzung zurückzuführende Temperaturänderung verstanden. Durch den Faktor von mindestens zwei zwischen dem Grenzwert und den üblichen Messwertschwankungen kann erreicht werden, dass ein unbeabsichtigter und unnötiger Betrieb im Reduktionsbetriebszustand vermieden werden kann.

Gemäß einer weiteren vorteilhaften Ausgestaltung des erfindungsgemäßen Verfahrens wird der Grenzwert so gewählt, dass dieser der Flanke eines Temperaturanstieges durch Kohlenmonoxidfreisetzung im Ofen entspricht.

Dies bedeutet, dass der Grenzwert so gewählt wird, dass nur bei signifikanten Anstiegen der Temperatur eine Änderung des Betriebszustandes des Ofens vom Standardbetriebszustand in den Reduktionsbetriebszustand erfolgt.

Gemäß einer weiteren vorteilhaften Ausgestaltung liegt der Grenzwert bei mindestens 4 Kelvin/sec.

Besonders bevorzugt ist eine Ausgestaltung, bei der der Grenzwert bei mindestens 10 Kelvin/sec. liegt. Diese starken schnellen Anstiege der Temperatur lassen sich praktisch ausschließlich auf Kohlenmonoxidfreisetzungen zurückführen. Übliche Temperaturanstiege aufgrund des Heizzyklus sowie die Messwertschwankungen liegen deutlich tiefer. Folglich ist eine Grenzwertsetzung von mindestens 5 Kelvin/sec. und insbesondere mindestens 10 Kelvin/sec. oder sogar mindestens 20 Kelvin/sec. vorteilhaft, da so eine sichere Erkennung der Kohlenmonoxidfreisetzung gewährleistet werden kann.

Gemäß einer weiteren vorteilhaften Ausgestaltung des erfindungsgemäßen Verfahrens wird die Reduktionsdauer so gewählt, dass diese der Dauer eines Temperaturanstieges durch Kohlenmonoxidfreisetzung im Ofen entspricht.

Bei einem bestimmten Ofen sind sowohl die Dauer als auch die Höhe der Temperaturanstiege durch Kohlenmonoxidfreisetzung bekannt oder messbar, da diese Öfen üblicherweise mit bestimmten Zusammensetzungen von Ausgangsstoffen also bspw. bestimmten Mengen Eisenschrott und bestimmten Mengen zugeführter Kohle betrieben werden. Von daher kann dieses Wissen dazu benutzt werden, sowohl den Grenzwert als auch die Reduktionsdauer und/oder den Reduktionsvolumenstrom und/oder den Erhöhungsvolumenstrom festzulegen. Dies führt ofenabhängig zu einer bestmöglichen Verringerung des nötigen Energieeinsatzes oder einer entsprechenden Steigerung der Offeneffizienz.

Gemäß einer weiteren vorteilhaften Ausgestaltung des erfindungsgemäßen Verfahrens beträgt die Reduktionsdauer mindestens 20 sec.

Übliche Kohlenmonoxidfreisetzungen bewirken Temperaturanstiege, so genannte Peaks, die mindestens 20 sec. lang sind. Von daher kann durch eine Festsetzung der Reduktionsdauer auf mindestens 20 sec. besonders vorteilhaft eine Reduktion des Energieeinsatzes erreicht werden.

Gemäß einer weiteren vorteilhaften Ausgestaltung des erfindungsgemäßen Verfahrens ist der Reduktionsvolumenstrom so bemessen, dass die Differenz aus Sollbrennstoffvolumenstrom und Reduktionsvolumenstrom multipliziert mit der Reduktionsdauer einem Brennstoffvolumen entspricht, dessen Brennwert dem mittleren Brennwert der Oxidation einer Kohlenmonoxidfreisetzung zu Kohlendioxid im Ofen entspricht. Alternativ oder zusätzlich kann Erhöhungsvolumenstrom so bemessen, dass eine vollständige Oxidation der Kohlenmonoxidfreisetzung erfolgen kann.

Unter Brennwert wird hierbei die Energiemenge verstanden, die bei dem entsprechenden Prozess thermisch freigesetzt wird. Es ist bspw. bekannt, dass bei der Oxidation von 1 m³ Kohlenmonoxid zu Kohlendioxid eine Energiemenge von etwa 3,5 kWh (Kilowattstunden) freigesetzt wird. Da der Abgasvolumenstrom üblicherweise bekannt ist oder durch eine Abgasanalyse ermittelbar ist und auch die übliche Kohlenomonoxidkonzentration im Abgas bekannt oder ermittelbar ist, kann so berechnet werden, wie viel Kohlenmonoxid in einer Kohlenmonoxidfreisetzung zu Kohlendioxid umgesetzt wird. Hieraus lässt dann berechnen, wie weit der Brennstoffeinsatz zu reduzieren ist. Dies wird durch Reduktion des Brennstoffvolumenstroms und der Reduktionsdauer erreicht. Alternativ oder zusätzlich kann der Erhöhungsvolumenstrom so bemessen sein, dass eine vollständige Oxidation der Kohlenmonoxidfreisetzung erfolgen kann.

Gemäß einer weiteren vorteilhaften Ausgestaltung des erfindungsgemäßen Verfahrens liegt der Quotient aus Reduktionsvolumenstrom und Sollbrennstoffvolumenstrom im Bereich von 0,3 bis 0,9 und/oder der Quotient aus Solloxidansvolumenstrom und Erhöhungsvolumenstrom im Bereich von 0,3 bis 0,9. Diese Quotienten erlauben in vorteilhafter Weise eine entsprechende Ausnutzung der thermischen Energie der Oxidation der Kohlenmonoxidfreisetzung zu Kohlendioxid. Es ist nochmals darauf hinzuweisen, dass es beim Übergang vom Sollbetriebszustand in den Reduktionsbetriebszustand zu einer schlagartigen Reduktion des Brennstoffvolumenstroms und/oder Erhöhung des Oxidansvolumenstroms kommt. Bevorzugt ist eine Reduktion des Brennstoffvolumenstroms und/oder eine Erhöhung des Oxidansvolumenstroms um 10 bis zu 50 %.

Gemäß einer weiteren vorteilhaften Ausgestaltung des erfindungsgemäßen Verfahrens umfasst das Oxidans mindestens einen der folgenden Stoffe:
a) Luft und
b) Sauerstoff.

Als Oxidans können also reiner Sauerstoff oder Umgebungsluft, sowie Mischungen derselben zum Einsatz kommen. Bevorzugt ist ein Oxidans, bei dem der Sauerstoffanteil bis zu 100 % vorliegt.

Gemäß einer weiteren vorteilhaften Ausgestaltung des erfindungsgemäßen Verfahrens ist der Erhöhungsvolumenstrom so bemessen, dass er zur vollständigen Oxidation einer üblichen Kohlenmonoxidfreisetzung ausreicht.

Bei bekannten Betriebsbedingungen sind auch üblicherweise die Kohlenmonoxidkonzentrationen in Kohlenmonoxidfreisetzungen bekannt oder messbar, so dass eine Einstellung des Erhöhungsvolumenstroms bei bekannter Reduktionsdauer erfolgen kann.

Gemäß einer weiteren vorteilhaften Ausgestaltung umfasst der Ausgangsstoff Kohlenstoff.

Hierbei kann der Kohlenstoff entweder in Verbindungen als Lack, Öl, Fett, beispielsweise als Schmieröl, Getriebeöl beim Aufschmelzen von Motoren oder ähnliches oder in reiner Form, beispielsweise in Form von Anthrazitkohle vorliegen.

Gemäß einer weiteren vorteilhaften Ausgestaltung des erfindungsgemäßen Verfahrens umfasst der Ausgangsstoff mindestens eines der folgenden metallischen Elemente:
a) Eisen;
b) Aluminium;
c) Mangan;
d) Zinn;
e) Zink; und
f) Blei.

Die Elemente können in Verbindungen auftreten, insbesondere beim Recyclen von Industriegütern wie beispielsweise Motoren, Batterien oder Lötzinn. Besonders bevorzugt lässt sich das erfindungsgemäße Verfahren beim Aufschmelzen von Eisenschrott einsetzen. Hierbei kann aufgrund der dort notwenigen hohen Energiemenge aufgrund des hohen Schmelzpunktes eine große Energieeinsparung durch das erfindungsgemäße Verfahren erzielt werden.

Gemäß einer weiteren vorteilhaften Ausgestaltung des erfindungsgemäßen Verfahrens ist der Ofen ein Ofen einer der folgenden Arten:
a) ein Rotationsofen;
b) ein Kupolofen;
c) ein Drehofen;
d) ein Kippofen;
e) ein Schmelz/Gießofen; und
f) ein Wannenofen.

Insbesondere der Einsatz des erfindungsgemäßen Verfahrens zum Betrieb eines Rotationsofens ist vorteilhaft, da durch die stete Durchmischung des Ausgangsstoffes im Ofen bei der Rotation es oft zu Kohlenmonoxidfreisetzungen kommt.

Bei einem Kupolofen kommt es bspw. zur Kohlenmonoxidfreisetzung, wenn nach Durchbrennen einer Kohleschicht ein Absacken des Ausgangsstoffes im Kupolofen erfolgt.

Gemäß einer weiteren vorteilhaften Ausgestaltung des erfindungsgemäßen Verfahrens wird im Standardbetriebszustand mindestens eine der folgenden Größen:
a) der Sollbrennstoffvolumenstrom und
b) der Solloxidansvolumenstrom
in Abhängigkeit von der Temperaturänderung kontinuierlich verändert.

Dies tritt folglich für Situationen zu, bei denen die Änderung der Temperatur unterhalb des Grenzwertes liegt. In solchen Betriebszuständen erfolgt eine Veränderung insbesondere des Sollbrennstoffvolumenstroms um sehr kleine Werte, nicht sprunghaft auf den Reduktionsvolumenstrom. Der Sollbrennstoffvolumenstrom und/oder der Solloxidansvolumenstrom ist somit kontinuierlich aber nicht sprunghaft anpassbar.

Gemäß einem weiteren Aspekt der vorliegenden Erfindung wird eine Vorrichtung zur Durchführung des erfindungsgemäßen Verfahrens vorgeschlagen, umfassend ein Steuermittel, welches geeignet und bestimmt zur Durchführung des erfindungsgemäßen Verfahrens ist und ein Temperaturfühler zur Erfassung der Temperatur des Abgases des Ofens.

In einer bevorzugten Ausgestaltung der erfindungsgemäßen Vorrichtung ist eine Abgasleitung ausgebildet, mit der das Abgas des Ofens abgeführt werden kann, die einen abgewinkelten Abschnitt aufweist, wobei der Temperaturfühler stromabwärts des abgewinkelten Abschnitts ausgebildet ist.

Durch den abgewinkelten Abschnitt der Abgasleitung wird verhindert, dass Teile des Ausgangsstoffes bspw. größere Schrottteile den Temperaturfühler erreichen und diesen schädigen können. Alternativ oder zusätzlich kann die Abgasleitung auch einen Abschnitt mit einer Steigung aufweisen, wobei der Temperaturfühler bevorzugt in einem Bereich ausgebildet ist, der im Vergleich zum Ofenausgang erhöht ist, um so einen Schutz des Temperaturfühlers zu erreichen.

Die für das erfindungsgemäße Verfahren offenbarten Details und Vorteile sind auf die erfindungsgemäße Vorrichtung anwend- und übertragbar und umgekehrt. Im Folgenden wird die Erfindung anhand der beigefügten Zeichnung näher erläutert, ohne auf die dort gezeigten Details und Ausführungsbeispiele beschränkt zu sein.

Es zeigen schematisch:
- Fig. 1:: einen nach dem erfindungsgemäßen Verfahren betreibbaren Ofen;
- Fig. 2:: einen Verlauf der Temperatur und des Kohlenmonoxidgehalts ohne Einsatz des erfindungsgemäßen Verfahrens;
- Fig. 3:: einen Ausschnitt des Temperaturverlaufs ohne Einsatz des erfindungsgemäßen Verfahrens; und
- Fig. 4: einen Ausschnitt des Temperaturverlaufs mit Einsatz des erfindungsgemäßen Verfahrens.

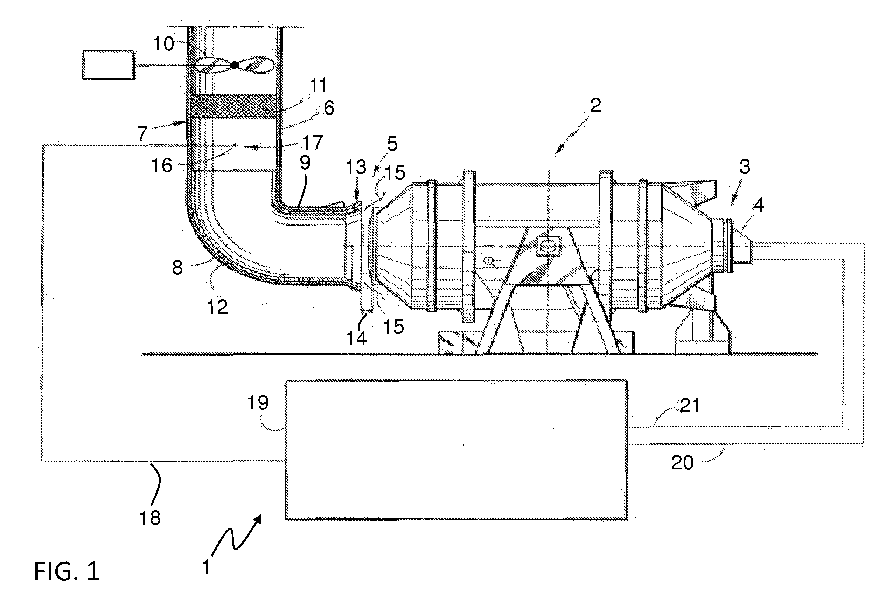

Figur 1 zeigt schematisch ein Ausführungsbeispiel der erfindungsgemäßen Vorrichtung 1 zum Betrieb eines Ofens 2. Der Ofen 2 ist ein Rotationsofen, in dem ein zumindest ein metallisches Element umfassender Ausgangsstoff wie bspw. Eisenschrott mit Zusatzstoffen wie beispielsweise Kohle aufgeschmolzen wird.

Der Ofen 2 umfasst einen Einlass 3 mit einem Brenner 4. Durch den Brenner 4 werden ein Oxidans wie bspw. Sauerstoff, Luft oder sauerstoffangereicherte Luft und ein Brennstoff wie bspw. Erdgas in den Ofen 2 eingebracht. Weiterhin umfasst der Ofen 2 einen Auslass 5, durch den die Abgase der Verbrennungs- und Oxidationsprozesse im Ofen 2 in eine Abgasleitung 6 überführt werden. Die Abgasleitung 6 umfasst einen abgewinkelten Abschnitt 7, der über einen gebogenen Abschnitt 8 mit einem geraden Abschnitt 9 verbunden ist. Über eine Absaugvorrichtung 10 kann das Abgas aus dem Ofen 2 durch die Abgasleitung 6 abgesaugt werden. Hierbei können Filtermittel 11 in der Abgasleitung 6 ausgebildet sein, die eine Filterung und/oder zumindest teilweise chemische Umsetzung des Abgases bewirken. Insbesondere der gebogene Abschnitt 8 der Abgasleitung 6 und das Innere des Ofens 2 (hier nicht gezeigt) ist mit einem feuerfesten Material 12 ausgekleidet, um eine Widerstandskraft gegenüber der hohen Temperatur des Abgases, der Metallschmelze und der entstehenden Schlacke zu erreichen.

Der Einlassbereich 13 des geraden Abschnittes 9 ist aufgeweitet ausgebildet, wobei dessen innerer Durchmesser größer ist als der entsprechende Auslass 5 des Ofens 2. Weiterhin ist der Einlassbereich 13 in einem Abstand 14 beabstandet zum Auslass 5 des Ofens 2 ausgebildet. Durch diesen Abstand 14 kann Umgebungsluft 15 dem Abgas beigemischt werden, wodurch dieses abgekühlt wird. Durch die zutretende Umgebungsluft 15 kann es zur Oxidation von Kohlenmonoxid zu Kohlendioxid kommen.

Die Vorrichtung 1 umfasst einen Temperatursensor 16 zur Bestimmung der Temperatur des Abgases des Ofens 2. Dieser Temperatursensor 16 ist an einem Messpunkt 17 in der Abgasleitung und zwar in deren abgewinkeltem Abschnitt 7, dass heißt stromabwärts des gebogenen Abschnitts 8ausgebildet. Der Temperaturmessfühler 16 ist über eine Datenleitung 18 mit einem Steuermittel 19 verbunden. In dem Steuermittel 19 wird der Brennstoffvolumenstrom über eine Brennstoffleitung 20 und der Oxidansvolumenstrom über eine Oxidansleitung 21 zum Brenner 4 gesteuert. Das Steuermittel 19 erfasst die Temperatur des Abgases im Messpunkt 17. Diese Temperatur wird in vorgebbaren Zeitabständen aufgezeichnet, die aufgezeichneten Temperaturwerte werden miteinander verglichen und die zeitliche Änderung der Temperatur berechnet.

Übersteigt die Änderung der Temperatur einen vorgebbaren Grenzwert, bspw. 5 °C/sec., so wird der Ofen 2 in einen Reduktionsbetriebszustand versetzt. Dies bedeutet, dass der Brennstoffvolumenstrom von einem Sollbrennstoffvolumenstrom auf einen Reduktionsvolumenstrom schlagartig erniedrigt wird, das heißt, der Reduktionsvolumenstrom liegt mindestens 5 % unterhalb des Sollbrennstoffvolumenstroms, bevorzugt sogar mindestens 10 % unter dem Sollbrennstoffvolumenstrom. Der Reduktionsbetriebszustand wird für eine vorgebbare Reduktionsdauer aufrechterhalten. Während dieser Reduktionsdauer werden keine weiteren Veränderungen des Brennstoffvolumenstroms vorgenommen, dieser bleibt konstant.

Dauer und Differenz zwischen Sollbrennstoffvolumenstrom und Reduktionsvolumenstrom sind so bemessen, dass diese einer verringerten Brennstoffzufuhr in mit einem Brennwert der Größenordnung entsprechen, den eine Kohlenmonoxidfreisetzung im Ofen 2 zur in den Ofen eingebrachten Energie beiträgt. Eine Erhöhung des Oxidansvo lumenstrom ist nicht notwendig, da der direkte Verbrauch des Oxidans durch die verminderte Brennstoffzufuhr sinkt und das so weiterhin zur Verfügung stehende Oxidationsmittel wie bspw. Sauerstoff zur Oxidation des Kohlenmonoxids zu Kohlendioxid benutzt werden kann. Die dabei entstehende thermische Energie wird zur weiteren Aufheizung des Ausgangsstoffs im Ofen 2 benutzt.

Die Kohlenmonoxidfreisetzungen erfolgen immer dann, wenn größere Mengen kohlenstoffhaltigen Materials wie bspw. Kohle in Kontakt mit einer genügend großen Menge Oxidans kommen und/oder eine entsprechende Flammentemperatur erreichen. Dies kann bspw. in einem Rotationsofen dann der Fall sein, wenn Eisenschrott mit Kohle wie bspw. Anthrazitkohle aufgeschmolzen wird und beim Drehen des Ofens 2 größere Chargen Kohle mit dem Oxidans in Kontakt kommen. Dann entsteht eine Kohlenmonoxidfreisetzung von nicht durchoxidiertem Kohlenstoff. Diese Kohlenmonoxidfreisetzung wird durch Kontakt mit Oxidans bei entsprechend hoher Temperatur weiter zu Kohlendioxid oxidiert. Dieser Prozess ist exotherm. Ohne Rücknahme der Brennstoffzufuhr kommt es zu einem starken Anstieg der Temperatur des Abgases, um oftmals mehrere Hundert °C, bspw. um 350 °C und mehr. Diese Aufheizung des Abgases und folglich auch des Ausgangsmaterials im Ofen und des Ofens ist unerwünscht, das sie zur Aufschmelzung des Ausgangsstoffes nicht notwendig ist und eine hohe thermische Belastung des Ofens und insbesondere dessen Innenwand und der Abgasleitung 6 bedeutet. Durch die erfindungsgemäße Verfahrensführung wird nun dieser Temperaturanstieg deutlich reduziert. Dies führt einerseits zu einer erheblichen Energieeinsparung indem Brennstoff eingespart wird und andererseits zu einer deutlich geringeren thermischen Belastung des Ofens 2 und der Abgasleitung 6. Auch das Filtermittel 11 wird einem geringeren thermischen Stress ausgesetzt.

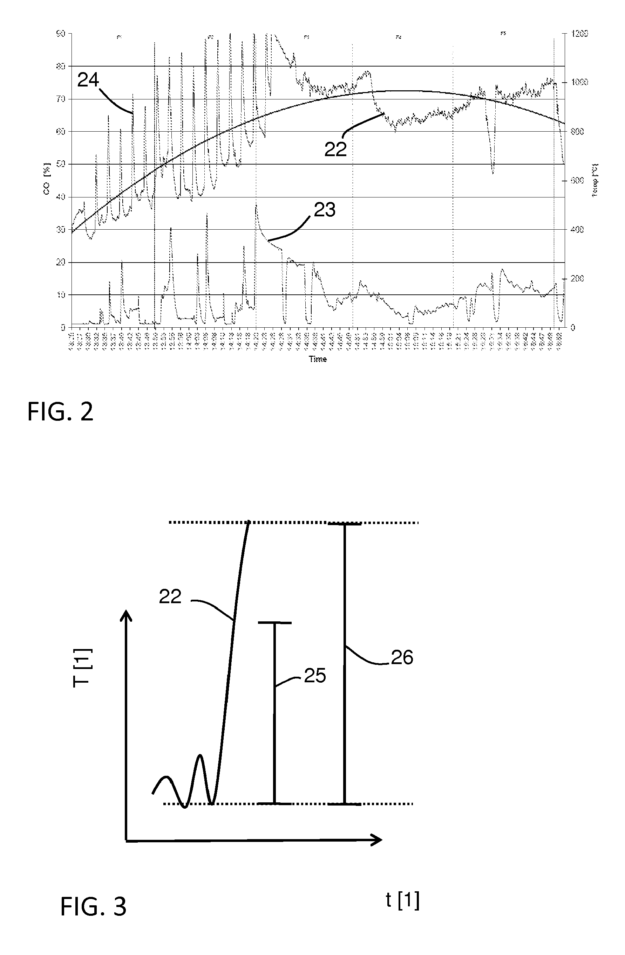

Figur 2 zeigt einen experimentell bestimmten Temperaturverlauf 22 der Abgastemperatur und einen experimentell bestimmten Kohlenmonoxidverlauf 23 des Kohlenmonoxidgehalts im Abgas eines Rotationsofens. Es ist zu erkennen, dass immer dann, wenn die Kohlenmonoxidverlaufskurve 23 ansteigt auch die Temperaturverlaufkurve 22 ansteigt. Mit einer Kohlenmonoxidfreisetzung 24 ist ein entsprechender Peak im Kohlenmonoxidverlauf 23 gemeint. Experimentelle Messungen haben ergeben, dass einem entsprechenden Peak im Kohlenmonoxidverlauf praktisch zeitgleich ein entsprechender Peak im entsprechenden Temperaturverlauf 22 entspricht.

Figur 3 zeigt schematisch einen Ausschnitt des Temperaturverlaufs 22 aus Figur 2. Der Temperaturverlauf 22 zeigt einen steilen Anstieg. Beim Vergleich mit dem vorgebbaren Grenzwert 25 wird festgestellt, dass die Änderung 26 der Temperatur größer ist als der vorgegebene Grenzwert 25. In diesem Falle wird der Ofen 2 vom Standardbetriebszustand in den Reduktionsbetriebszustand versetzt, sofern er sich nicht bereits im Reduktionsbetriebszustand befindet. Nach Ablauf der vorgegebenen Reduktionsdauer wird der Ofen 2 wieder im Standardbetriebszustand betrieben.

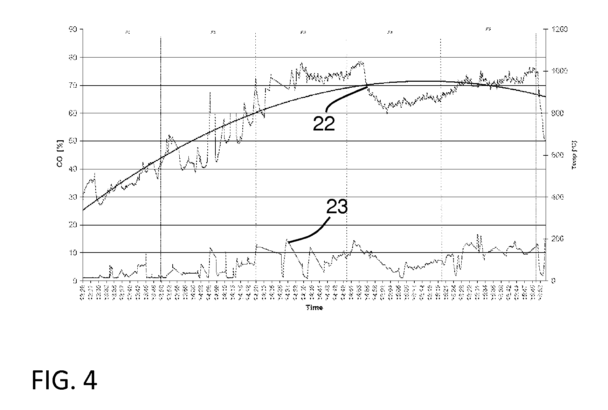

Fig. 4 zeigt einen entsprechenden Temperaturverlauf 22 im Abgas unter Einsatz des erfindungsgemäßen Verfahrens. Die Kohlenmonoxidfreisetzungen führen zu einem deutlich verringerten Temperaturanstieg, die thermische Energie der Oxidation des Kohlenmonoxid zu Kohlendioxid wird besser ausgenutzt. Der Kohlenmonoxidverlauf 23 im Abgas zeigt deutlich geringere Peaks.

Das erfindungsgemäße Verfahren und die erfindungsgemäße Vorrichtung erlauben in vorteilhafter Weise den Betrieb eines Ofens 2 zum Aufschmelzen bspw. von Eisenschrott mit hohem Energieeinsparungspotential im Vergleich zu aus dem Stand der Technik bekannten Verfahren, da hier eine schlagartige und signifikante Reduktion des Brennstoffvolumenstroms erfolgt, wenn eine starke Änderung der Temperatur, die auf Freisetzung und weitere Umsetzung einer signifikanten Menge von Kohlenmonoxid schließen lässt, erfolgt. So kann die bei der Verbrennung von Kohlenmonoxid zu Kohlendioxid erzeugte Wärme zur weiteren Aufheizung des Ausgangsstoffes genutzt werden. Weiterhin werden in vorteilhafter Weise die thermischen Belastungen des Ofens 2 und der Abgasleitung 6 reduziert und damit die Standzeit dieser Geräte erhöht.

### Bezugszeichenliste

- 1: Vorrichtung zum Betrieb eines Ofens
- 2: Ofen
- 3: Einlass
- 4: Brenner
- 5: Auslass
- 6: Abgasleitung
- 7: abgewinkelter Abschnitt
- 8: gebogener Abschnitt
- 9: gerader Abschnitt
- 10: Absaugvorrichtung
- 11: Filtermittel
- 12: feuerfestes Material
- 13: Einlassbereich
- 14: Abstand
- 15: Umgebungsluft
- 16: Temperaturmessfühler
- 17: Messpunkt
- 18: Datenleitung
- 19: Steuermittel
- 20: Brennstoffleitung
- 21: Oxidansleitung
- 22: Temperaturverlauf
- 23: Kohlenmonoxidverlauf
- 24: Kohlenmonoxidfreisetzung
- 25: Grenzwert
- 26: Änderung der Temperatur

## Patentansprüche

1. Verfahren zum Betrieb eines Ofens (2), bei dem ein zumindest ein metallisches Element umfassender Ausgangsstoff aufgeschmolzen wird, indem der Ausgangsstoff durch mindestens einen Brenner (4) erwärmt wird, der mit einem Brennstoffvolumenstrom eines Brennstoffs und einem Oxidansvolumenstrom eines Oxidans betrieben wird, wobei eine Abgastemperatur des Ofens (2) überwacht wird, wobei in einem Standardbetriebszustand dem Brenner (4) ein Sollbrennstoffvolumenstrom und ein Solloxidansvolumenstrom zugeführt wird, wobei eine Änderung (26) der Abgastemperatur in vorgebbaren Zeitabständen aufgenommen und mit einem vorgebbaren Grenzwert (25) verglichen wird, **dadurch gekennzeichnet, dass** dann, wenn die Änderung (26) der Abgastemperatur größer als der Grenzwert (25) ist, der Brenner (4) für eine Reduktionsdauer in einen Reduktionsbetriebszustand versetzt wird, in dem der Quotient von Brennstoffvolumenstrom zu Oxidansvolumenstrom durch mindestens eine der folgenden Maßnahmen:
A) einer sprunghaften Reduktion des Brennstoffvolumenstroms auf einen Reduktionsvolumenstrom und
B) einer sprunghaften Erhöhung des Oxidansvolumenstroms auf einen Erhöhungsvolumenstrom
erniedrigt und nach Ablauf der Reduktionsdauer in den Standardbetriebszustand zurückversetzt wird.

2. Verfahren nach Anspruch 1, bei dem der Grenzwert (25) so gewählt wird, dass dieser mindestens um einen Faktor zwei größer ist als übliche Messwertschwankungen.

3. Verfahren nach einem der vorhergehenden Ansprüche, bei dem der Grenzwert (25) so gewählt wird, dass dieser der Flanke eines Temperaturanstieges durch Kohlenmonoxidfreisetzung im Ofen (2) entspricht.

4. Verfahren nach einem der vorhergehenden Ansprüche, bei dem der Grenzwert (25) bei mindestens 4 K/s liegt

5. Verfahren nach einem der vorhergehenden Ansprüche, bei dem die Reduktionsdauer so gewählt wird, dass diese der Dauer eines Temperaturanstieges durch Kohlenmonoxidfreisetzung im Ofen (2) entspricht.

6. Verfahren nach einem der vorhergehenden Ansprüche, bei dem die Reduktionsdauer mindestens 20 Sekunden beträgt.

7. Verfahren nach einem der vorhergehenden Ansprüche, bei dem der Reduktionsvolumenstrom so bemessen ist, dass die Differenz aus Sollbrennstoffvolumenstrom und Reduktionsvolumenstrom multipliziert mit der Reduktionsdauer einem Brennstoffvolumen entspricht, dessen Brennwert dem mittleren Brennwert einer Kohlenmonoxidfreisetzung im Ofen entspricht.

8. Verfahren nach einem der vorhergehenden Ansprüche, bei dem ein Quotient aus Reduktionsvolumenstrom und Sollbrennstoffvolumenstrom und/oder der Quotient aus Solloxidansvolumenstrom und Erhöhungsvolumenstrom im Bereich von 0,3 bis 0,9 liegt.

9. Verfahren nach einem der vorhergehenden Ansprüche, bei dem der Erhöhungsvolumenstrom so bemessen ist, dass er zur vollständigen Oxidation einer üblichen Kohlenmonoxidfreisetzung ausreicht.

10. Verfahren nach einem der vorhergehenden Ansprüche, bei dem der Ausgangsstoff Kohlenstoff umfasst.

11. Verfahren nach einem der vorhergehenden Ansprüche, bei dem der Ausgangsstoff mindestens eines der folgenden metallischen Elemente umfasst:
a) Eisen;
b) Aluminium;
c) Mangan;
d) Zinn;
e) Zink; und
f) Blei.

12. Verfahren nach einem der vorhergehenden Ansprüche, bei dem der Ofen (2) ein Ofen (2) einer der folgenden Arten ist:
a) ein Rotationsofen;
b) ein Kupolofen;
c) ein Drehofen;
d) ein Kippofen;
e) ein Schmelz/Gießofen; und
f) ein Wannenofen..

13. Verfahren nach einem der vorhergehenden Ansprüche, bei dem im Standardbetriebszustand mindestens eine der folgenden Größen:
a) der Sollbrenstoffvolumenstrom und
b) der Solloxidansvolumenstrom
in Abhängigkeit von der Temperaturänderung kontinuierlich verändert wird.

14. Vorrichtung (1) zur Durchführung des Verfahren nach einem der vorhergehenden Ansprüche, umfassend ein Steuermittel (19), welches geeignet und bestimmt zur Durchführung des Verfahrens nach einem der vorhergehenden Ansprüche ist und einen Temperaturfühler (16) zur Erfassung der Temperatur des Abgases des Ofens (2).

15. Vorrichtung (1) nach Anspruch 14, bei der eine Abgasleitung (6) mit einem abgewinkelten Abschnitt (7) ausgebildet ist und der Temperaturfühler (16) stromabwärts des abgewinkelten Abschnitts (7) ausgebildet ist.
